# EUROPEAN PATENT SPECIFICATION

(11) **EP 3 398 488 B1**
(45) Date of publication and mention of the grant of the patent: **19.02.2020**
(21) Application number: 17169574.5
(22) Date of filing: 04.05.2017
(51) Int. Cl.: A47J 31/44, A47J 31/46

(54) **COFFEE MACHINE DRIP TRAY**
KAFFEEMASCHINEN-TROPFENSCHALE
PLATEAU D'ÉGOUTTAGE DE MACHINE À CAFÉ

(43) Date of publication of application: 07.11.2018
(73) Proprietor: BSH Hausgeräte GmbH, 81739 München (DE)
(72) Inventor: Drobez, Iztok, 3313 Polzela (SI); Lemez, Samo, 3327 Smartno ob Paki (SI); Semprimoznik, Ales, 3330 Mozirje (SI)

(56) References cited:
- EP-A2- 2 067 422
- AU-A1- 2012 200 582
- DE-B3-102015 208 212
- US-A- 5 110 469
- US-A- 5 245 915

## Description

### Background of the invention

The present invention relates to a fully automatic coffee machine having a water tank, a pump, a brewing unit, a heater, a steam relief unit and a drainage system where a drip tray is equipped with a multi function element detachably connected to the drip tray of the coffee machine.

### State of the art

Automatic coffee brewing devices are known in the state of the art and commonly used in restaurants, catering organizations and other high volume food production institutions. Typically, brewing machines have a body with removable water tank for clear water, a pump which delivers the water to the heating source and next to the brewing unit. The beverage brewing substance is infused with heated water to produce a brewed beverage. The typical coffee machine has a drip tray located at the bottom of the machine and adapted to collect the dripping liquid - water or beverage generated during the brewing process during normal use. The drip tray can be emptied and rinsed by the user. The frequency of this simple hygiene maintenance depends on the use and rest time of the machine but should be carried out frequently enough to avoid bad smells and organic growth. The drip tray is removable for emptying and cleaning manually in comfortable and simple manner or it can be connected with the sewage system so the waste disposal is performed by the gravity by a drainage pipe outside the machine. The drip tray has a considerable volume therefore can contain a additional parts inside such as screening elements increasing the non clogging time of the drainage system.

The patent application DE 10 2015 208 212 B3 discloses a beverage dispenser with a removable drip tray, a screening device arranged in the drip tray upstream of a drainage device and a drainage and / or drainage container. According to the invention, at least one partial region of an active surface of the screening device can be arranged in an outlet region of the expansion and / or drainage container. This ensures, in particular long, no-clogging operation without additional cleaning components and thus improves the cleaning effort with simple handling by means of a cost-effective solution.

The patent application US 52 45 915 A discloses a tray assembly for use in receiving and retaining used moist brewing substances and the like from a beverage brewing apparatus and separating a liquid portion therefrom. The tray assembly is in communication with an entry port which deposits moist brewing substances therein. A drain line in the brewing apparatus carries separated liquids away from said tray assembly. The tray assembly includes a tray body, a liquid separation portion retained in said tray body for drawing off liquids from moist brewing substances, and a controllably sealable tray valve assembly attached to the tray body and operatively engaging the drain line for draining liquids from the tray assembly. A first area in the tray body between the entry port and the liquid separation portion communicates with the entry port and defines a receiving and retaining space. A second area in the tray body between the liquid separating portion and the valve assembly communicates with the tray valve assembly and defines a liquid collection space. Drained brewing substance is retained in the receiving and retaining space for removal at a later time. Liquid drawn off of the brewing substance into the liquid collection space flows from the tray assembly out through the tray valve assembly when engaged with the drain line.

The patent application US 5 110 469 A discloses a coffee grounds disposal and strainer arrangement adapted to be utilized in conjunction with the operation of an automatic coffee brewer.

The patent application EP 2 067 422 A2 shows a drip pan for automatic coffee machines which has a visible section arranged outside of an automatic coffee machine and a non-visible section that is arranged in an inner side of the coffee machine.

The patent application AU 2012 200 582 A1 discloses an espresso coffee machine comprising a water reservoir for holding water; a group head including a collar for receiving a filter assembly and a group head outlet for delivering water to the filter assembly when received by the collar; a steam delivery arrangement including: a steam outlet; a steam outlet path providing fluid communication between the water reservoir and the steam outlet; a dedicated steam outlet path pump; and a dedicated steam outlet path heater.

Presented solutions does not provide efficient and long term retention of small particles of grinded coffee seeds what causes clogging of the drainage system too often. The main disadvantage of the simple and cost - effective screening means are that they become blocked frequently and have to be cleaned manually what requires some time and effort from the user.
Another problem that arises is that during the brewing process a great volume of steam and moisture is created inside the coffee machine body what makes the protection the internal components of the device from the harmful effects caused by the steam and moisture existence difficult.

### The aim of the invention

It is the object of the present invention to overcome problems associated with automatic brewers blocking of drainage installation system and increase the no clogging time of operation of the coffee machines and reduce the maintenance time.
Another object of the invention is to reduce steam and moisture volume inside the device to protect its internal components from the detrimental effect caused by the steam and moisture existence.

### Summary of the invention

This object is solved by a coffee machine drip tray whereby a multi function element contains a steam guiding part and a strainer part where a bottom side of the steam guiding part is equipped with at least one rib.
A coffee machine is a device designed for performing a brewing process. The coffee machine is equipped with a drip tray. The drip tray is placed at the bottom of the coffee machine body and it is provided to collect liquids - water and beverage generated during the brewing process during normal use. The drip tray is made out of high temperature resistance material with a drawer shape having protrusions making the drip tray operation easy and comfortable for the user. The drip tray is equipped with a water capacity sensor which is activated when the waste water level is too high to ensure safe operation of the coffee machine. Activation of the water capacity sensor brings the information to the user about the necessity of the drainage system unclogging. Inside the drip tray a multi function element is provided.
The multi function element contains a steam guiding part and a strainer part. The multi function element is detachably connected to the drip pan. The positive effect is that the user can detach the multi function element in comfortable, easy way to perform the maintenance.
The shape of the steam guiding part is rectangular and it is a part of the multi function element. The steam guiding part can have different geometry: squared, oval, polygon or irregular. The upper side of the steam guiding part is flat and it is equipped with a steam inlet. The shape of the steam guiding part and placement of the steam inlet depends on the shape of the inner side of the coffee machine.
The strainer part is a lattice made out of plastic or other material which can be moulded over the metal mesh which acts as a sieve for stopping small coffee particles.
The drainage system is provided to drain the waste water and small amounts of the beverage outside the coffee machine. The advantage from application the drainage system to the coffee machine is that all user actions concerning removing water from the coffee machine is done automatically without user involvement.

It is to be understood that both the foregoing general description and the following detailed description are exemplary, and are intended to provide further explanation of the invention as claimed. Other advantages and features of the invention will be apparent from the following description, drawings and claims.

### Preferred embodiment of the invention

In a preferred embodiment of the invention the multi function element is a two component part produced in 2K injection moulding process which combines properties of two different materials: metal and plastic. The advantage is that the multi function element can be produced in easy and fast way. Cleaning of such element under the running water is easy to perform. Moreover, the part is equipped with small mounting elements placed on its outer periphery which match small mounting elements placed at the bottom of the drip tray. The geometry of the outer periphery of the multi function element and the shape of small mounting elements provide tight connection between the multi function element and the drip tray which is necessary for proper functioning and prevent solid particles clogging the drainage system.

In another embodiment of the invention the strainer part contains a lattice and a mesh filling out the lattice holes. The lattice part is made out of plastic or other material with similar features. The shape of the lattice part is designed to function as a backbone for the metal mesh which together constitute a strainer part. The mesh is made out of metal or other material that ensures great sieving quality of the coffee particles. The diameter of the mesh holes is selected during tests and its main role is to prevent small coffee particles from getting to the drainage system. The positive effect is that the drainage system stays unclogged for the long time and preparing beverages is not disturbed by the necessity of performing maintenance activities e.g. unclogging the drainage system.

In the preferred embodiment of the invention the steam guiding part is equipped with steam inlet. The steam inlet of the steam guiding part corresponds with the steam outlet of the steam relief unit of the coffee machine.
After the brewing process is finished a ceramic valve sets free the steam which was generated during the process to the steam relief unit to be finally removed from the coffee machine.
The steam inlet is simple a hole and its main function is to guide the steam generated during brewing process to the bottom side of the steam guiding part. The steam is condensed at the bottom side of the steam guiding part and the water drops into the drip tray directly. The water from the drip tray is directed outside the coffee machine body. The main advantage of this process is reduction the vapour and moisture volume from inside body of the coffee machine which have deteriorating effect to the coffee machine elements and is responsible for bad smell and organic growth which is not acceptable by the user.

According to the invention a bottom side of the steam guiding part is equipped with at least one rib. Preferably there are five ribs arranged in a set of lines which are curved and which shape was designed based on functional tests. The main function of the ribs is to collect condensed steam. The advantage is that the steam and moisture are removed from the coffee machine body and guided by the steam inlet to the bottom side of the steam guiding part to be condensed on the ribs and finally reach the drip tray. Additional positive effect is that the pure condensed water passes through the waste water outlet what help to sustain the waste water outlet to stay clean and pervious.

In another embodiment of the invention the steam outlet of the steam relief unit is sealed by a sealing element. The steam outlet of the steam relief unit corresponds with the steam inlet of the steam guiding part. To provide tightness between this two elements the connection is sealed by additional sealing element made out of rubber or other elastic material which features can provide desirable sealing quality. The sealing element prevents steam from leaking what additionally leads to increasing the amount of pure condensed water which cleans the waste water outlet and the drainage system.

In the preferred embodiment of the invention the drip tray is equipped with at least one waste water outlet. The pure water drops from the ribs directly to the drip pan from where is removed by the drainage system through the waste water outlet. The positive effect is that the user is not involved with the drip tray emptying process each time the beverage is prepared.
The drainage system contains simple elements like waste water outlet placed on the rear side of the drip tray and the drainage part e.g. simple elastic pipe which connects the waste water outlet of the drip tray with the sewage system. The pipe is directed downwardly the sewage system and it uses gravity effect to drain the waste water from the drip tray.

The present invention provides a simple and cheap two component multi function element which is responsible for reducing the steam and moisture volume inside the coffee machine body and also which prevents coffee particles from clogging the drainage system of the coffee machine. The multi function element is cheap and its production can be performed in easy and fast way during one injection moulding process.

### Brief description of the drawings

The features of the invention believed to be novel are set forth with particularity in the appended claims. The invention itself, however, may be best understood by reference to the following detailed description of the invention, which describes an exemplary embodiment of the invention, taken in conjunction with the accompanying drawings. Further benefits and advantages of the present invention will become apparent after a careful reading of the detailed description with appropriate reference to the accompanying drawings.
In the drawings:
- Fig. 1: exemplary shows a coffee machine isometric view;
- Fig. 2: shows a drip tray isometric view;
- Fig. 3: shows a top view of the multi function element;
- Fig. 4: shows a bottom side of the multi function element;

### Detail description of the invention

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

The automatic coffee machines have a body comprising a coffee grinder, a removable water reservoir, a pump, a brewing unit, a heater, a steam relief unit, a milk frothing unit and a coffee outlet and also sensors, valves to automate the brewing process. Such coffee machines can have also a drainage system for waste water and other fluids disposal.

Clear, cold water from the water reservoir is delivered by the pump to the heater which heats the water to the desirable brewing temperature. Then the hot water is forcing by the pressure to go through ground coffee beans and flows through the coffee outlet to the cup. The steam created during the brewing process is released by the steam relief unit to the drip tray.

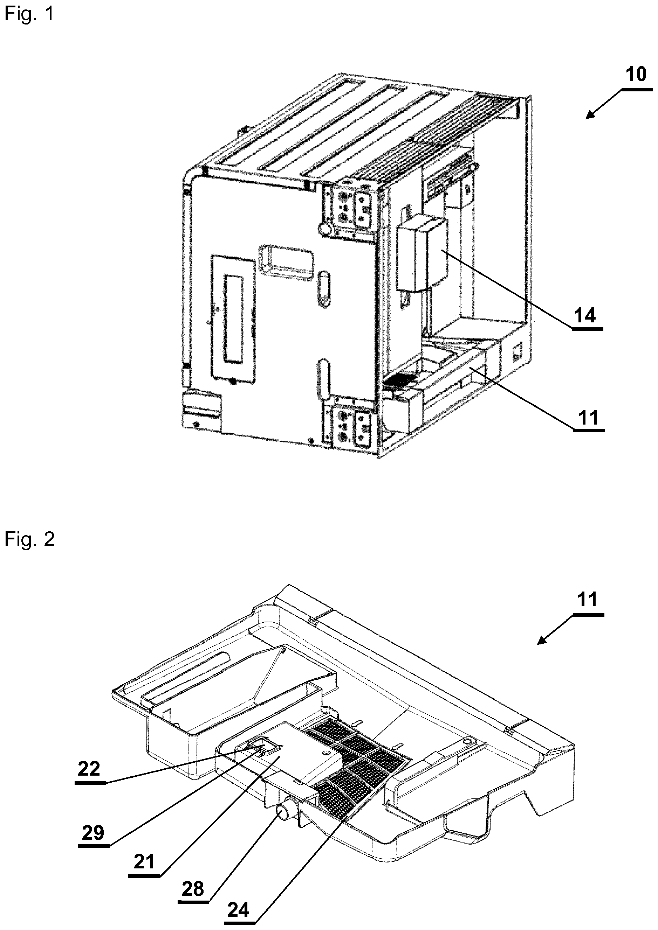

Fig. 1 shows an isometric view of a coffee machine (10) with visible drip tray (11) and a coffee outlet (14). The drip tray (11) is a drawer shaped temporary reservoir for waste water. The drip tray (11) can be detached from the coffee machine (10) body and special protrusions in the front of the drip tray (11) are provided to easy handle the drip tray (11) to perform cleaning activities. The drip tray (11) is placed at the bottom of the coffee machine (10).
The coffee machine (10) has also a removable water tank and many components like a pump, a brewing unit, a heater, a steam relief unit (13), a milk frothing unit, sensors, valves etc. which are not shown on the figure but existence of which is necessary to carry out the brewing process.

Fig. 2 shows a drip tray (11) with a multi function element (20) in an isometric view.
The multi function element (20) is placed inside the body of the drip tray (11) near the waste water outlet (28). The drip tray (11) bottom is deepen in the direction of the waste water outlet (28) to collect great amount of water and to assure drainage of the waste water to the external sewage system which is not shown of the figures. The bottom of the drip tray (11) is equipped with small mounting elements (not shown on the figures) for receiving mounting elements of the multi function element (20). The multi function element (20) is mounted to the drip tray (11) by simple snapping this two parts together. At the deepest rear side of the drip tray (11) the waste water outlet (28) is placed. The waste water outlet (28) is connected to the sewage system so the waste disposal process is performed by the gravity by a drainage pipe outside the machine which is not shown on the figures.

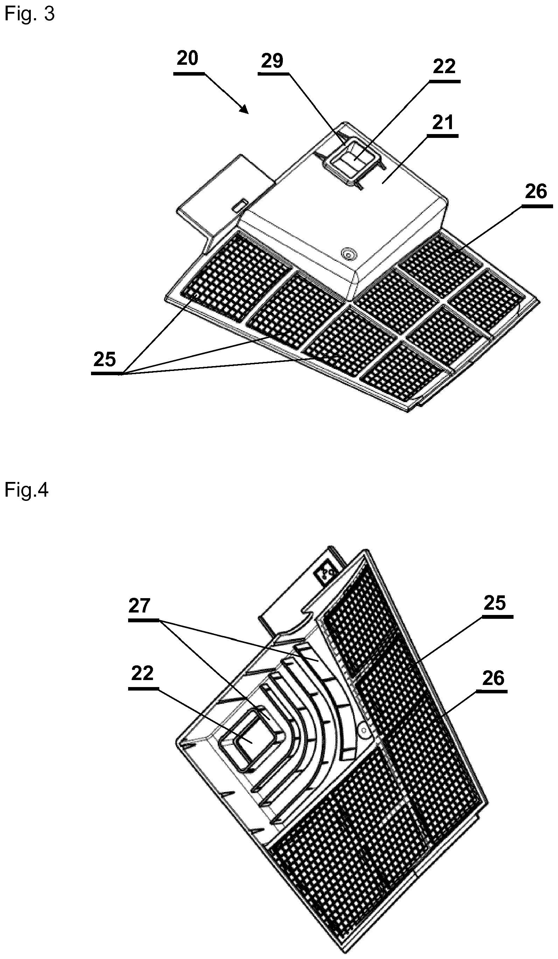

Fig. 3 shows a top view of the multi function element (20). The main parts of the multi function element (20) is a steam guiding part (21) and the strainer part (23).
The steam guiding part (21) is rectangular protrusion emerged above the strainer part (23) surface. The shape of the steam guiding part (21) is designed in such a way to match the cooperating elements of the coffee machine (10). The steam guiding part (21) is provided with a steam inlet (22) by which the steam generated during brewing process is guided to the drip tray (11).
The strainer part (23) is two component element consisting of metal mesh (26) and plastic lattice (24) where the metal mesh (26) fills out the lattice holes (25). The diameter of the metal mesh holes is small enough to prevent small particles of the coffee to get through. Some coffee particles are held on the multi function element (20) and can be cleaned after its disassembling from the drip tray (11). The shape of the multi function element (20) is designed to tightly fit the drip tray (11) bottom geometry what makes retention most of the small coffee particles away from the waste water outlet (28) possible.

Fig. 4 shows a bottom side of the multi function element (20). The bottom side of the multi function element (20) is equipped with ribs (27) arranged in a set of lines which are curved and which shape was designed based on functional tests.

The present invention provides a simple and cheap two component multi function element which is responsible for reducing the steam and moisture volume inside the coffee machine body and also which prevents coffee particles from clogging the drainage system of the coffee machine. The multi function element is cheap and its production can be performed in easy and fast way during one injection moulding process.

### LIST OF REFERENCE SIGNS

- 10: coffee machine
- 11: drip tray
- 12: steam outlet
- 13: steam relief unit
- 14: coffee outlet

- 20: multi function element
- 21: steam guiding part
- 22: steam inlet
- 23: strainer part
- 24: lattice
- 25: lattice holes
- 26: mesh
- 27: rib
- 28: waste water outlet
- 29: sealing element

## Claims

1. A fully automatic coffee machine (10) having a water tank, a pump, a brewing unit, a heater, a steam relief unit (13) and a drainage system where a drip tray (11) is equipped with a multi function element (20) detachably connected to the drip tray (11) of the coffee machine (10) **characterized in that** the multi function element (20) contains a steam guiding part (21) and a strainer part (23) and a bottom side of the steam guiding part (21) is equipped with at least one rib (27).

2. A fully automatic coffee machine (10) according to claim 1, **characterized in that** the multi function element (20) is two component part.

3. A fully automatic coffee machine (10) according to claim 2, **characterized in that** the strainer part (23) contains a lattice (24) and a mesh (26) filling out the lattice holes (25).

4. A fully automatic coffee machine (10) according to any of preceding claims, **characterized in that** the steam guiding part (21) is equipped with steam inlet (22).

5. A fully automatic coffee machine (10) according to claim 4, **characterized in that** the steam inlet (22) of the steam guiding part (21) corresponds with the steam outlet (12) of the steam relief unit (13).

6. A fully automatic coffee machine (10) according to claim 5, **characterized in that** the steam outlet (12) of the steam relief unit (13) is sealed by a sealing element (29).

7. A fully automatic coffee machine (10) according to any of preceding claims, **characterized in that** the drip tray (11) is equipped with at least one waste water outlet (28).

## Patentansprüche

1. Vollautomatische Kaffeemaschine (10) mit einem Wassertank, einer Pumpe, einer Brüheinheit, einer Heizvorrichtung, einer Dampfentspannungseinheit (13) und einem Ablaufsystem, wobei eine Tropfschale (11) mit einem Multifunktionselement (20) versehen ist, das abnehmbar mit der Tropfschale (11) der Kaffeemaschine (10) verbunden ist, **dadurch gekennzeichnet, dass** das Multifunktionselement (20) einen Dampfleitteil (21) und einen Siebteil (23) enthält und eine untere Seite des Dampfleitteils (21) mit mindestens einer Rippe (27) versehen ist.

2. Vollautomatische Kaffeemaschine (10) nach Anspruch 1, **dadurch gekennzeichnet, dass** es sich bei dem Multifunktionselement (20) um ein Zweikomponententeil handelt.

3. Vollautomatische Kaffeemaschine (10) nach Anspruch 2, **dadurch gekennzeichnet, dass** der Siebteil (23) ein Gitter (24) und ein Maschengewebe (26) aufweist, das die Gitterfreiräume (25) ausfüllt.

4. Vollautomatische Kaffeemaschine (10) nach einem der vorhergehenden Ansprüche, **dadurch gekennzeichnet, dass** der Dampfleitteil (21) mit einem Dampfeinlass (22) versehen ist.

5. Vollautomatische Kaffeemaschine (10) nach Anspruch 4, **dadurch gekennzeichnet, dass** der Dampfeinlass (22) des Dampfleitteils (21) mit dem Dampfauslass (12) der Dampfentspannungseinheit (13) übereinstimmt.

6. Vollautomatische Kaffeemaschine (10) nach Anspruch 5, **dadurch gekennzeichnet, dass** der Dampfauslass (12) der Dampfentspannungseinheit (13) mit einem Dichtungselement (29) abgedichtet ist.

7. Vollautomatische Kaffeemaschine (10) nach einem der vorhergehenden Ansprüche, **dadurch gekennzeichnet, dass** die Tropfschale (11) mit mindestens einem Abwasserauslass (28) versehen ist.

## Revendications

1. Machine à café intégralement automatique (10) ayant un réservoir d'eau, une pompe, une unité de brassage, un élément chauffant, une unité de libération de vapeur (13) et un système de drainage dans lequel un bac d'égouttage (11) est doté d'un élément multifonction (20) relié de façon amovible au bac d'égouttage (11) de la machine à café (10) **caractérisée en ce que** l'élément multifonction (20) contient une pièce de guidage de vapeur (21) et une pièce de criblage (23) et un côté inférieur de la pièce de guidage de vapeur (21) est doté d'au moins une nervure (27).

2. Machine à café intégralement automatique (10) selon la revendication 1, **caractérisée en ce que** l'élément multifonction (20) est une pièce à deux composants.

3. Machine à café intégralement automatique (10) selon la revendication 2, **caractérisée en ce que** la pièce de criblage (23) contient un maillage (24) et un filet (26) comblant les orifices du maillage (25).

4. Machine à café intégralement automatique (10) selon l'une quelconque des revendications précédentes, **caractérisée en ce que** la pièce de guidage de vapeur (21) est dotée d'une entrée de vapeur (22).

5. Machine à café intégralement automatique (10) selon la revendication 4, **caractérisée en ce que** l'entrée de vapeur (22) de la pièce de guidage de vapeur (21) correspond à la sortie de vapeur (12) de l'unité de libération de vapeur (13).

6. Machine à café intégralement automatique (10) selon la revendication 5, **caractérisée en ce que** la sortie de vapeur (12) de l'unité de libération de vapeur (13) est étanchéifiée par l'élément d'étanchéité (29).

7. Machine à café intégralement automatique (10) selon l'une quelconque des revendications précédentes, **caractérisée en ce que** le bac d'égouttage (11) est doté d'au moins une sortie d'eaux usées (28).
